# EUROPÄISCHE PATENTSCHRIFT

(11) **EP 2 019 229 B1**
(45) Veröffentlichungstag und Bekanntmachung des Hinweises auf die Patenterteilung: **12.10.2011**
(21) Anmeldenummer: 08008968.3
(22) Anmeldetag: 15.05.2008
(51) Int. Cl.: F16H 3/00, F16H 3/093

(54) **Stufengetriebe mit Doppelkupplung**
Stepped transmission with double coupling
Boîte de vitesse à double embrayage

(30) Priorität: 21.07.2007 DE 102007034553
(43) Veröffentlichungstag der Anmeldung: 28.01.2009
(73) Patentinhaber: GM Global Technology Operations LLC, Detroit, MI 48265-3000 (US)
(72) Erfinder: Geiberger, Axel, 55116 Mainz (DE)
(74) Vertreter: Strauss, Peter

(56) Entgegenhaltungen:
- EP-A1- 1 610 023
- WO-A1-2007/020431
- DE-A1- 10 060 699
- DE-A1- 19 911 027
- JP-A- 2006 132 572
- US-A1- 2004 025 612
- US-A1- 2005 209 042

## Beschreibung

Die vorliegende Erfindung betrifft ein Stufengetriebe mit Doppelkupplung, insbesondere für ein Kraftfahrzeug nach dem Oberbegriff des Anspruchs 1.

Ein solches Getriebe ist aus JP 2006 132 572 A1 und aus US 2005/0209042 A1 bekannt.

DE 199 11 027 A1 offenbart ein Doppelkupplungsgetriebe mit einer Antriebswelle, zwei Eingangswellen, zwei Kupplungen zum Übertragen von Drehmoment von der Antriebswelle wahlweise auf die erste oder die zweite Eingangswelle, und einer Mehrzahl von von der Antriebswelle über eine der Eingangswellen zu einer gleichen Ausgangswelle verlaufenden Radsätzen zum Übertragen des Drehmoments von Antriebswelle auf die Ausgangswelle mit einer Mehrzahl von Übersetzungsverhältnissen. Zwei sich über jeweils verschiedene Eingangswellen erstreckende Radsätze haben dasselbe Übersetzungsverhältnis, um beim Anfahren beide Kupplungen geschlossen halten zu können. So steht für einen Anfahrvorgang unter hoher Last, zum Beispiel beim Anfahren mit Anhänger an einem Hang, eine hohe Drehmomentübertragungskapazität zur Verfügung.

Aufgabe der vorliegenden Erfindung ist, ein Doppelkupplungsgetriebe der eingangs beschriebenen Art so weiterzubilden, dass bei kompakter Bauform bzw. mit einer geringen Zahl von Rädern die Realisierung einer großen Zahl verschiedener Übersetzungsverhältnisse realisierbar ist.

Die Aufgabe wird gelöst durch ein Stufengetriebe mit den Merkmalen des Anspruchs 1. Indem zu zwei Radsätzen eines herkömmlichen Stufengetriebes, die einen ersten Gang bzw. einen zweiten Gang übertragen, ein Radsatz hinzugefügt wird, dessen Übersetzungsverhältnis näher an dem ersten als an dem zweiten Gang liegt, ist die Reibungswärme, die bei gleichzeitiger Nutzung des dem ersten Gang zugeordneten Radsatzes und des zusätzlichen Radsatzes frei wird, natürlich kleiner als bei gleichzeitiger Nutzung der Radsätze des ersten und des zweiten Gangs. Da die von den Teilkupplungen aufzunehmende Wärmemenge gering ist, können diese klein und leicht ausgeführt werden. Die Doppelkupplungen können somit preiswert gefertigt werden, und ihr verringertes Trägheitsmoment ermöglicht außerdem Kraftstoffeinsparungen im Betrieb.

Wenn, wie gemäß der Erfindung vorgesehen, die Zahl der Vorgelegewellen zwei ist, könnten dem ersten und dem zweiten Radsatz jeweils von verschiedenen Vorgelegewellen oder von derselben Vorgelegewelle getragene Räder angehören. Wenn sie verschiedenen Vorgelegewellen angehören, und beide Vorgelegewellen einen gleichen Abstand von den koaxialen Antriebswellen haben, dann könnte ein von einer Antriebswelle getragenes Rad, wenn es mit Rädern beider Vorgelegewellen kämmt, nur zu beiden Vorgelegewellen dasselbe Übersetzungsverhältnis realisieren. Es würde daher für den Bau eines Getriebes mit einer gegebenen Zahl von Übersetzungsverhältnissen eine relativ hohe Zahl von Rädern benötigt. Die Erfindung sieht deshalb für die erste Vorgelegewelle einen größeren Abstand von den koaxialen Antriebswellen vor als für die zweite Vorgelegewelle. Indem ferner dem ersten und dem zweiten Radsatz jeweils von der ersten Vorgelegewelle getragene Räder angehören, ist beim dritten Radsatz ein höheres Übersetzungsverhältnis als das des ersten und des zweiten Radsatzes realisierbar, indem diesem dritten Radsatz das von einer Eingangswelle getragene Rad des zweitens Radsatzes und ein Rad an der zweiten Vorgelegewelle angehört.

Dieser zweite Radsatz muss nicht als ein eigenständiger Gang auswählbar sein; hierfür wird er aufgrund seiner kleinen Stufung zum ersten Gang in der Regel nicht benötigt. Seine Nutzung kann jedoch vorteilhaft sein, um ein unterbrechungsfreies Schalten in den dritten Gang zu ermöglichen, wie später noch genauer erläutert wird.

Wenn erster und zweiter Radsatz das gleiche Übersetzungsverhältnis haben, ist durch die Nutzung dieser beiden Radsätze beim Anfahren ein Gleichlauf zwischen den zwei Eingangswellen realisierbar, und beide Teilkupplungen der Doppelkupplung können bis zum Erreichen ihrer maximalen Drehmomentübertragungskapazität geschlossen werden. Aufgrund des Gleichlaufs der zwei Eingangswellen wird bei einem Anfahren mit dem erfindungsgemäßen Stufengetriebe nicht mehr Reibungswärme in der Kupplung freigesetzt als beim Anfahren unter Verwendung einer einzigen Teilkupplung.

Wenn auch der erste Radsatz ein von einer Eingangswelle getragenes Rad mit einem vierten Radsatz gemeinsam hat, so bildet dieser vierte Radsatz zweckmäßigerweise einen Rückwärtsgang.

Um höhere Gänge darzustellen, trägt zweckmäßigerweise wenigstens eine der Eingangswellen ein Rad, das größer als die von den Eingangswellen getragenen Räder des ersten und des zweiten Radsatzes ist, und das zwei Radsätzen angehört.

Weitere Merkmale und Vorteile der Erfindung ergeben sich aus der nachfolgenden Beschreibung eines

Ausführungsbeispiels unter Bezugnahme auf die beigefügten Figuren. Es zeigen:
- Fig. 1: eine schematische Darstellung eines erfindungsgemäßen Stufengetriebes; und
- Fig. 2: eine tabellarische Darstellung des Drehmomentflusses im Getriebe der Fig. 1 in verschiedenen Schaltzuständen.

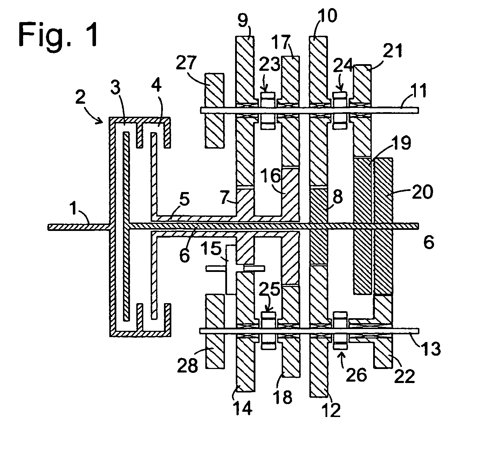

Das in Fig. 1 gezeigte Stufengetriebe hat eine Antriebswelle 1, die mit einem nicht dargestellten Motor eines Kraftfahrzeugs verbunden ist und über eine Doppelkupplung 2 mit unabhängig voneinander betätigbaren Teilkupplungen 3, 4 Eingangswellen 5, 6 eintreibt. Die über die Teilkupplung 4 antreibbare Eingangswelle 5 ist hohl, und in ihrem Inneren verläuft koaxial die mit der Teilkupplung 3 verbundene Eingangswelle 6.

Beide Eingangswellen 5, 6 tragen Festräder 7, 8 von gleichem Durchmesser, die mit Losrädern 9, 10 einer Vorgelegewelle 11 zwei Radsätze mit gleichem Übersetzungsverhältnis bilden. Das Festrad 8 kämmt außerdem mit einem Losrad 12 einer zweiten Vorgelegewelle 13. Der Abstand zwischen der Vorgelegewelle 13 einerseits und den Eingangswellen 5, 6 andererseits ist kleiner als der zwischen der Vorgelegewelle 11 und den Eingangswellen 5, 6, so dass der Durchmesser des Losrades 12 kleiner als der des Losrades 10 und des Übersetzungsverhältnis des von den Rädern 8, 12 gebildeten Radsatzes höher als das des Radsatzes 8, 10 ist. Genauer gesagt stellen die Radsätze 7, 9 und 8, 10 jeweils einen ersten Gang des Getriebes dar und der Radsatz 8, 12 einen zweiten Gang.

Dem Festrad 7 liegt an der zweiten Vorgelegewelle 13 ein Losrad 14 gegenüber, das geringfügig kleiner als das Losrad 9 ist. Es ist daher nicht direkt, sondern über ein Zwischenrad 15 an das Festrad 7 gekoppelt und stellt so einen Rückwärtsgang mit einem geringfügig höheren Übersetzungsverhältnis als dem des ersten Ganges dar.

Ein zweites Festrad 16 der Eingangswelle 5, das größer als die Festräder 7, 8 ist, kämmt mit einem Losrad 17 der Vorgelegewelle 11 und einem Losrad 18 der Vorgelegewelle 13. Der Radsatz aus den Rädern 16, 17 stellt einen dritten, der aus den Rädern 16, 18 einen fünften Gang des Getriebes dar.

Zwei Festräder 19, 20 der Eingangswelle 6, die wiederum größer sind als das Rad 16, kämmen mit Losrädern 21, 22 der Vorgelegewelle 11 bzw. 13, um einen vierten und einen sechsten Gang darzustellen. Die zwei Festräder 19, 20 können eventuell auch zu einem einzigen, mit beiden Losrädern 21, 22 kämmenden Rad verschmolzen sein.

Klauenkupplungen 23 bis 26 mit Sperrsynchronisation, die jeweils zwischen Paaren von Losrädern 9 und 17, 10 und 21, 14 und 18 bzw. 12 und 22 angeordnet sind, dienen zum Herstellen einer drehfesten Verbindung zu der jeweiligen Vorgelegewelle 11 bzw. 13, die dann über ein Rad 27 bzw. 28 eine nicht dargestellte, beiden Vorgelegewellen 11, 13 gemeinsame Abtriebswelle und schließlich Räder des Kraftfahrzeugs antreibt. Die Klauenkupplungen 23 - 26 sind platzsparend, paarweise axial überlappend, an den zwei Vorgelegewellen 11, 13 angeordnet.

Zum Anfahren im ersten Gang, bei geschlossenen Teilkupplungen 3, 4, sind die Losräder 9, 10 gleichzeitig über die Klauenkupplungen 23, 24 an die Vorgelegewelle 11 gekoppelt. Nach dem Anfahren wird die Teilkupplung 3 geöffnet, so dass die Eingangswelle 6 lastfrei wird, und die Klauenkupplung 24 wird geöffnet. Vor dem Umschalten in den 2. Gang wird über die Klauenkupplung 26 das Losrad 12 an die Vorgelegewelle 13 gekoppelt. Durch Schließen der Teilkupplung 3 und gleichzeitiges Öffnen der Teilkupplung 4 wird der zweite Gang eingelegt.

Entsprechend wird zum Umschalten vom zweiten in den dritten Gang zunächst das Losrad 9 von der Vorgelegewelle 11 ab-und das Losrad 17 angekoppelt, dann wird die Teilkupplung 4 geschlossen und die Teilkupplung 3 geöffnet. Zum Umschalten in den 4. Gang wird an der Klauenkupplung 24 das Losrad 21 angekoppelt; dann werden gleichzeitig die Teilkupplung 3 geschlossen und die Teilkupplung 4 geöffnet.

Zum Umschalten in den 5. Gang wird zunächst an der Klauenkupplung 25 das Gangrad 18 an die Vorgelegewelle 13 gekoppelt, und nach Umschalten der Teilkupplungen 3, 4 wird die Klauenkupplung 24 geöffnet. Das Umschalten in den 6. Gang erfolgt durch Ankoppeln des Losrades 22 an die Vorgelegewelle 13, gefolgt vom Umschalten der Teilkupplungen 3, 4.

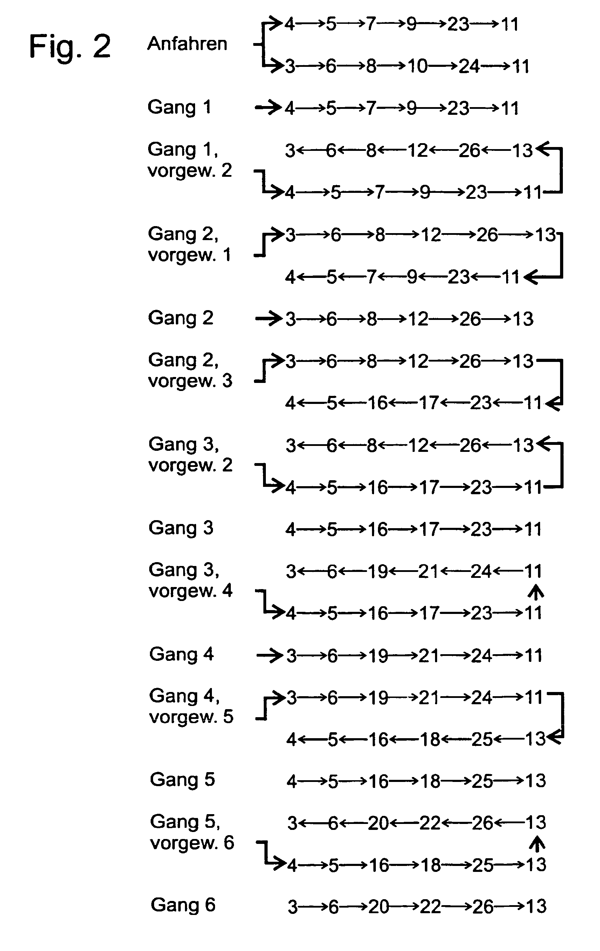

In analoger Weise kann schrittweise vom sechsten in den ersten Gang zurückgeschaltet werden, ohne jemals den Drehmomentfluss zu unterbrechen, indem jeweils der nächst niedrigere Gang zunächst vorgewählt und dann durch Umschalten der Teilkupplungen 3, 4 eingelegt wird. Die hierfür benutzten Räder und Kupplungen sowie die Richtung der Drehmomentübertragung zwischen ihnen sind in Fig. 2 tabellarisch zusammengefasst.

Das Schema der Fig. 2 sieht nicht vor, dass der Übertragungsweg des Drehmoments über die Räder 8, 10 schaltbar ist, wenn nicht gleichzeitig der Weg über das Räderpaar 7,9 geschaltet ist. Einer Weiterentwicklung zufolge kann jedoch problemlos, ohne irgendwelche Veränderungen am Aufbau des Getriebes, die Möglichkeit geschaffen werden, ohne Unterbrechung des Drehmomentflusses vom dritten in den ersten Gang zu schalten, indem im ersten Gang der Weg über die Räder 8, 10 genutzt wird.

### Bezugszeichenliste

- Antriebswelle: 1
- Doppelkupplung: 2
- Teilkupplungen: 3, 4
- Eingangswellen: 5, 6
- Festräder: 7, 8
- Losräder: 9, 10
- Vorgelegewelle: 11
- Losrad: 12
- Vorgelegewelle: 13
- Losrad: 14
- Zwischenrad: 15
- Festrad: 16
- Losrad: 17, 18
- Festrad: 19, 20
- Losrad: 21, 22
- Klauenkupplung: 23-26
- Rad: 27, 28

## Patentansprüche

1. Stufengetriebe mit einer Antriebswelle (1), zwei zueinander koaxialen Eingangswellen (5, 6), einer Doppelkupplung (2) zum Übertragen von Drehmoment von der Antriebswelle (1) wahlweise auf die erste oder die zweite Eingangswelle (5, 6), und einer Mehrzahl von Radsätzen (7, 9; 8, 10; 8, 12; 16, 17; 16, 18; ...) zum Übertragen des Drehmoments von der ersten oder der zweiten Eingangswelle (6, 5) auf wenigstens eine Vorgelegewelle (11, 13) mit einer Mehrzahl von Übersetzungsverhältnissen, wobei die Stufung zwischen einem ersten Radsatz (7, 9) zum Übertragen des Drehmoments von der ersten Eingangswelle (5), der das niedrigste Übersetzungsverhältnis aus der Mehrzahl von Übersetzungsverhältnissen aufweist, und einem zweiten Radsatz (8, 10) zum Übertragen des Drehmoments von der zweiten Eingangswelle (6), der das zweitniedrigste Übersetzungsverhältnis aus der Mehrzahl von Übersetzungsverhältnissen aufweist, kleiner ist als zwischen dem zweiten Radsatz (8, 10) und einem dritten Radsatz (8, 12), der das drittniedrigste Übersetzungsverhältnis aufweist, wobei die Zahl der Vorgelegewellen (11, 13) zwei ist und dem ersten und dem zweiten Radsatz (7, 9; 8, 10) jeweils von einer ersten (11) der Vorgelegewellen getragene Räder (9, 10) angehören, **dadurch gekennzeichnet, dass** die erste Vorgelegewelle (11) weiter als die zweite Vorgelegewelle (13) von den Eingangswellen (5, 6) beabstandet ist, und dass das von der zweiten Eingangswelle (6) getragene Rad (8) des zweiten Radsatzes (8, 10) mit einem von der zweiten Vorgelegewelle (13) getragenen Rad (12) den dritten Radsatz (8, 12) bildet.

2. Stufengetriebe nach Anspruch 1, **dadurch gekennzeichnet, dass** der erste und der zweite Radsatz (8, 10; 7,9) das gleiche Übersetzungsverhältnis aufweisen.

3. Stufengetriebe nach Anspruch 1 oder 2, **dadurch gekennzeichnet, dass** auch der erste Radsatz (7, 9) ein von der ersten Eingangswelle (5) getragenes Rad (7) mit einem vierten Radsatz (7, 15, 14) gemeinsam hat, und dass der vierte Radsatz (7, 15, 14) einen Rückwärtsgang bildet.

4. Stufengetriebe nach Anspruch 1, 2 oder 3, **dadurch gekennzeichnet, dass** wenigstens eine der Eingangswellen (5) ein Rad (16) trägt, das größer als die von den Eingangswellen (5, 6) getragenen Räder (8, 7) des ersten und des zweiten Radsatzes (7, 9; 8, 10) ist, und dass das größere Rad (16) zwei Radsätzen (16, 17; 16, 18) angehört.

5. Stufengetriebe nach einem der vorhergehenden Ansprüche, **dadurch gekennzeichnet, dass** eine der Eingangswellen (6) sich durch einen Hohlraum der anderen Eingangswelle (5) hindurch erstreckt.

## Claims

1. A variable-speed transmission, comprising a drive shaft (1), two input shafts (5, 6) which are coaxially with respect to each other, a double clutch (2) for the transmission of torque from the drive shaft (1) optionally into the first or second input shaft (5, 6), and a plurality of gearsets (7, 9; 8, 10; 8, 12; 16, 17; 16, 18; ...) for the transmission of torque from the first or second input shaft (6, 5) onto at least one intermediate shaft (11, 13) with a plurality of gear ratios, with the stepping between a first gearset (7, 9) for transmitting the torque from the first input shaft (5) which has the lowest gear ratio of the plurality of gear ratios and a second gearset (8, 10) for transmitting the torque from the second input shaft (6) which has the second lowest gear ratio of a plurality of gear ratios being smaller than between the second gearset (8, 10) and a third gearset (8, 10) which has the third lowest gear ratio, with the number of intermediate shafts (11, 13) being two and belonging to the first and second gearset (7, 9; 8, 10) of gears (9, 10) respectively carried by a first (11) of the input shafts, **characterized in that** the first intermediate shaft (11) is spaced further away from the input shaft (5, 6) than the second intermediate shaft (13), and that the gear (8) of the second gearset (8, 10) carried by the second input shaft (6) forms the third gearset (8, 12) with a gear (12) carried by the second intermediate shaft (13).

2. A variable-speed transmission according to claim 1, **characterized in that** the first and the second gearset (8, 10; 7, 9) have the same gear ratio.

3. A variable-speed transmission according to claim 1 or 2, **characterized in that** the first gearset (7, 9) also shares a gear (7) carried by the first input shaft (5) with a fourth gearset (7, 15, 14), and that the fourth gearset (7, 15, 14) forms a reverse gear.

4. A variable-speed transmission according to claim 1, 2 or 3, **characterized in that** at least one of the input shafts (5) carries a gear (16) which is larger than the gears (8, 7) of the first and second gearset (7, 9; 8, 10) carried by the input shafts (5, 6), and that the larger gear (16) belongs to two gearsets (16, 17; 16, 18).

5. A variable-speed transmission according to one of the preceding claims, **characterized in that** one of the input shafts (6) extends through a cavity of the other input shaft (5).

## Revendications

1. Engrenage réducteur avec un arbre d'entraînement (1), deux arbres d'entrée (5, 6) coaxiaux l'un de l'autre, un double accouplement (2) pour la transmission sélective d'un couple de rotation de l'arbre d'entraînement (1) au premier ou au deuxième arbre d'entrée (5, 6), et une pluralité de paires de roues (7, 9 ; 8, 10 ; 8, 12 ; 16, 17 ; 16, 18 ; ...) pour transmettre le couple du premier ou deuxième arbre d'entrée (6, 5) à au moins un arbre intermédiaire (11, 13) avec une pluralité de rapports de multiplication, la réduction entre une première paire de roues (7, 9) pour la transmission du couple à partir du premier arbre d'entrée (5), qui présente le plus faible rapport de multiplication parmi la pluralité de rapports de multiplication, et une deuxième paire de roues (8, 10) pour la transmission du couple à partir du deuxième arbre d'entrée (6), qui a le deuxième plus faible rapport de multiplication parmi la pluralité de rapports de multiplication, étant inférieure à celle entre la deuxième paire de roues (8, 10) et une troisième paire de roues (8, 12), qui a le troisième plus faible rapport de multiplication, les arbres intermédiaires (11, 13) étant au nombre de deux et des roues (9, 10) portées par un premier (11) des arbres intermédiaires faisant partie respectivement de la première paire de roues et de la deuxième (7, 9 ; 8, 10), **caractérisé en ce que** le premier arbre intermédiaire (11) est plus éloigné que le deuxième arbre intermédiaire (13) des arbres d'entrée (5, 6), et **en ce que** la roue (8) de la deuxième paire de roues (8, 10) portée par le deuxième arbre d'entrée (6) forme avec une roue (12) la troisième paire de roues (8, 12) portée par le deuxième arbre intermédiaire (13).

2. Engrenage réducteur selon la revendication 1, **caractérisé en ce que** la première paire de roues et la deuxième (8, 10 ; 7, 9) présentent le même rapport de multiplication.

3. Engrenage réducteur selon la revendication 1 ou 2, **caractérisé en ce que** la première paire de roues (7, 9) a elle aussi une roue (7) portée par le premier arbre d'entrée (5) en commun avec une quatrième paire de roues (7, 15, 14) et **en ce que** la quatrième paire de roues (7, 15, 14) forme un rapport de marche arrière.

4. Engrenage réducteur selon la revendication 1, 2 ou 3, **caractérisé en ce qu'**au moins un des arbres d'entrée (5) porte une roue (16) qui est plus grande que les roues (8, 7) de la première paire de roues et de la deuxième (7, 9; 8, 10) portées par les arbres d'entrée (5, 6), et **en ce que** la plus grande roue (16) fait partie de deux paires de roues (16, 17 ; 16, 18).

5. Engrenage réducteur selon l'une des revendications précédentes, **caractérisé en ce que** l'un des arbres d'entrée (6) s'étend à travers une cavité de l'autre arbre d'entrée (5).
